Europäisches Patentamt

**European Patent Office**

**Office européen des brevets**

(11) Numéro de publication: **0 254 637 B1**

(12) **FASCICULE DE BREVET EUROPEEN**

(45) Date de publication de fascicule du brevet:
**22.01.92**

(21) Numéro de dépôt: **87401690.0**

(22) Date de dépôt: **20.07.87**

(51) Int. Cl.⁵: **G01N 17/00**

(54) **Dispositif de mesure de la corrosivité de fumées.**

(30) Priorité: **22.07.86 FR 8610607**

(43) Date de publication de la demande:
**27.01.88 Bulletin 88/04**

(45) Mention de la délivrance du brevet:
**22.01.92 Bulletin 92/04**

(84) Etats contractants désignés:
**DE GB**

(56) Documents cités:
**DE-A- 2 361 709      DE-B- 1 162 107**
**DE-C- 1 147 412      GB-A- 1 356 023**
**US-A- 3 957 440      US-A- 4 600 695**

(73) Titulaire: **Rio, Pierre**
**8 rue Noel Donval**
**F-22300 Lannion(FR)**

Titulaire: **Gautier, Jacky**
**AD 222, rue d'Anjou Ker Uhel**
**F-22300 Lannion(FR)**

Titulaire: **Ubertal, Hubert**
**Kernu, Louannec**
**F-22700 Perros-Guirec(FR)**

(72) Inventeur: **Rio, Pierre**
**8 rue Noel Donval**
**F-22300 Lannion(FR)**
Inventeur: **Gautier, Jacky**
**AD 222, rue d'Anjou Ker Uhel**
**F-22300 Lannion(FR)**
Inventeur: **Ubertal, Hubert**
**Kernu, Louannec**
**F-22700 Perros-Guirec(FR)**

(74) Mandataire: **Schrimpf, Robert et al**
**Cabinet Regimbeau 26, Avenue Kléber**
**F-75116 Paris(FR)**

Rank Xerox (UK) Business Services

# Description

La présente invention concerne d'une façon générale les dispositifs de mesure de la corrosivité et plus particulièrement un dispositif destiné à mesurer les effets corrosifs de la combustion de certaines matières plastiques sur les métaux.

Lors d'un incendie ou analogue, par exemple dans un centre autocommutateur téléphonique, les matières plastiques brûlent en dégageant des fumées et des produits de pyrolyse contenant des particules en suspension et des gaz corrosifs. Lorsque ces fumées chaudes viennent en contact avec des parties plus froides, dont la température est inférieure à leur point de rosée, et en particulier avec des conducteurs métalliques, elles se déposent par condensation sur ces conducteurs. Dans de nombreux cas, ces dépôts contiennent des éléments tels que des ions halogènes, des acides, des bases, qui corrodent les métaux par un processus chimique, voire électrochimique lorsqu'il existe des tensions électriques.

Un dispositif de mesure de la corrosivité des fumées permet donc de déterminer, par essais successifs, les matières plastiques dont la combustion provoquera le moins de dégâts sur les parties conductrices.

On connaît déjà dans la technique antérieure, par un certain nombre de publications de la Demanderesse, un dispositif de mesure de la corrosivité de fumées comprenant une enceinte, des moyens pour créer dans l'enceinte une atmosphère d'air d'humidité déterminée, des moyens de chauffage pour amener ladite atmosphère et les parois de l'enceinte à une température déterminée, des moyens pour provoquer la combustion d'un échantillon de matière dans l'enceinte, des moyens de refroidissement à circulation d'eau pour condenser les fumées et produits de pyrolyse engendrés par ladite combustion sur un élément métallique résistif exposé à l'intérieur de l'enceinte, la mesure de la corrosivité des fumées étant effectuée en mesurant la variation de résistance électrique dudit élément.

Pour permettre la condensation des fumées sur l'éprouvette de mesure plus froide, constituée par l'élément résistif, l'atmosphère intérieure de l'enceinte doit être maintenue à une température de l'ordre de 50°, ce qui est réalisé, selon la technique antérieure, en utilisant comme moyens de chauffage une enceinte climatique dans laquelle le dispositif est placé.

Cependant, un inconvénient de cette solution réside en ce qu'il est alors impossible d'observer le comportement du dispositif, et notamment la manière dont s'effectuent la combustion, la condensation des produits de combustion sur l'éprouvette, et l'attaque du métal.

A cet égard, avec un tel dispositif connu, il est nécessaire dans la réalisation de l'enceinte, de trouver un compromis difficile entre une bonne résistance aux gaz agressifs, pour ne pas altérer les caractéristiques de l'atmosphère intérieure de l'enceinte, et une relative transparence thermique. Dans cet esprit, l'enceinte du dispositif de la technique antérieure comprend un cylindre en verre genre Pyrex (Marque déposée)recouvert intérieurement d'un revêtement résistant aux gaz agressifs, mais non transparent et des parois d'extrémité vissées en polyméthacrylate de méthyle à travers lesquelles passent les diverses lignes associées aux moyens mis en oeuvre pour effectuer la mesure.

Par ailleurs, un paramètre majeur qui doit être maîtrisé pour assurer la reproductibilité de la mesure de la corrosion est l'humidité relative dans l'enceinte. Cette humidité est affectée par tout défaut d'étanchéité qui entraîne, par ré-équilibrage des pressions partielles entre l'atmosphère intérieure humide et l'atmosphère sèche de l'enceinte climatique, une diminution notable de la proportion de molécules d'eau intervenant dans la condensation.

En outre la condensation des produits de combustion sur l'éprouvette est perturbée par le refroidissement indésirable de certaines parties des parois de l'enceinte, et une proportion mal déterminée des fumées humides présentes dans l'enceinte se condense alors sur ces parties au lieu de se condenser sur l'éprouvette.

La présente invention a pour objet de proposer un dispositif de mesure de la corrosivité de fumées dans lequel cette humidité relative soit correctement maîtrisée et les points froids éliminés, de manière à pouvoir effectuer des mesures répétables et reproductibles. Un autre objet de l'invention est de proposer un dispositif dans lequel les diverses phases opératoires puissent être facilement observées.

A cet effet, le dispositif de la présente invention est caractérisé en ce que l'enceinte comprend : un cylindre en polyméthacrylate de méthyle ouvert à ses deux extrémités ; deux portes d'extrémité thermiquement isolantes, constituées d'un ensemble de panneaux en polyméthacrylate de méthyle séparés par de l'air intersticiel, et des moyens d'isolation thermique et d'étanchéité aux gaz entre les portes et le cylindre; et en ce que les moyens de chauffage comprennent un fil métallique résistif enroulé en hélice sur la périphérie extérieure du cylindre.

D'autres aspects et avantages de la présente invention apparaîtront mieux à la lecture de la description détaillée suivante d'une forme de réalisation préférée de celle-ci, donnée à titre d'exemple et faite en référence aux dessins annexés, sur lesquels :

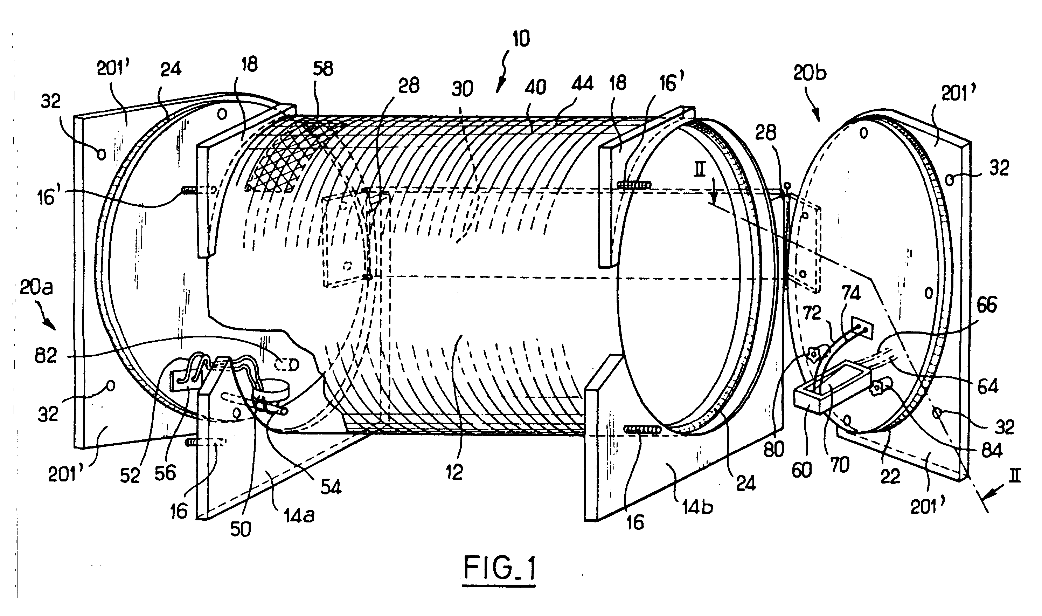

- la figure 1 est une vue en perspective d'ensemble d'un dispositif selon l'invention, et
- la figure 2 est une vue en coupe partielle selon la ligne II-II de la figure 1.

Le dispositif selon l'invention comprend tout d'abord une enceinte 10 constituée par un cylindre 12 d'axe horizontal en polyméthacrylate de méthyle transparent. Le cylindre est supporté à ses deux extrémités par deux pieds 14a et 14b sur lequel il est de préférence collé. Chaque pied comporte une tige filetée 16 s'étendant vers l'extérieur, et des tiges filetées identiques 16' sont également prévues au-dessus des tiges 16 sur des plaques 18 collées en bordure des ouvertures du cylindre dans l'alignement vertical des pieds.

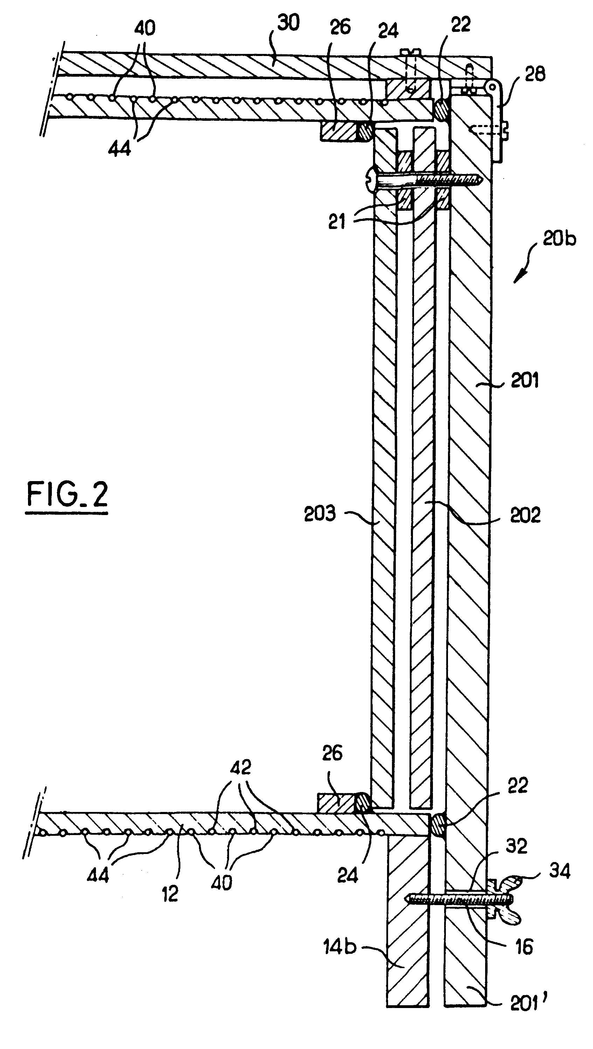

Le cylindre est obturé à ses deux extrémités par deux portes articulées 20a et 20b constituées chacune de trois panneaux en polyméthacrylate de méthyle transparent séparés les uns des autres par des espaces d'air, afin d'assurer une isolation thermique appropriée. Plus précisément, et comme le montre la figure 2, chaque porte, de forme circulaire, comprend un panneau de base extérieur 201 d'épaisseur relativement importante, un panneau intermédiaire 202 et un panneau intérieur 203. Les panneaux sont maintenus à un espacement déterminé les uns par rapport aux autres à l'aide d'entretoises appropriées 21. Le panneau extérieur 201 est plus large que la section extérieure du cylindre 12 et comporte un joint torique souple 22, par exemple collé, apte à venir en contact avec le bord associé du cylindre lorsque la porte est fermée. Les panneaux intermédiaire et intérieur ont un diamètre légèrement inférieur au diamètre intérieur du cylindre et, en position fermée, le panneau intérieur vient s'appuyer contre un second joint torique souple 24 retenu en direction axiale par un élément de retenue axiale 26 de forme annulaire, en polyméthacrylate de méthyle.

On notera que le polyméthacrylate de méthyle est avantageusement choisi pour la construction de l'enceinte en raison de son excellente résistance à une grande variété d'agents corrosifs et du fait qu'il existe sous forme transparente.

Une charnière 28 est montée entre un élément d'ossature 30 s'étendant horizontalement à l'arrière du cylindre, par exemple fixé sur un prolongement arrière supérieur de chacun des pieds de support 16a et 16b, et le panneau extérieur associé 201. En outre des trous 32 sont prévus en regard des tiges filetées 16, 16' dans des prolongements radiaux 201' du panneau extérieur 201 de chaque porte, pour recevoir ces dernières. En position fermée, des écrous à oreilles 34 viennent s'engager sur les tiges filetées 16, 16' pour serrer la porte associée et comprimer les joints 22, 24, comme représenté sur la figure 2. On peut noter que les joints 22 et 24 servent à isoler les espaces d'air situés entre les panneaux de portes vis-à-vis de l'extérieur et vis-à-vis de l'atmosphère intérieure de l'enceinte, respectivement. L'enceinte est donc parfaitement étanche aux gaz, avec une isolation thermique optimale.

Conformément à l'invention, l'enceinte est pourvue de moyens de chauffage asservis qui comprennent tout d'abord un élément chauffant 40 sous la forme d'un fil électrique résistif, de préférence en cuivre, enroulé en hélice dans une gorge complémentaire 42 prévue à la périphérie extérieure du cylindre 12, sur toute la longueur de celui-ci. Le fil 40 sera alimenté par un générateur électrique approprié.

Par ailleurs, un élément formant sonde de température présente la forme d'un second fil de cuivre 44 s'étendant en hélice dans une gorge 46 parallèlement au premier fil 40. Les variations de température de ce second fil 44 provoquent des variations correspondantes de sa résistance, et l'on concevra aisément à partir de l'élément chauffant et de l'élément capteur une régulation de température permettant de maintenir la température à l'intérieur de l'enceinte à une valeur choisie, comprise de préférence entre la température ambiante et 70°C. On peut noter que les moyens de chauffage ayant la structure décrite ci-dessus ont également pour effet d'amener les parois de l'enceinte à une température relativement uniforme de valeur déterminée, à des fins expliquées plus loin.

Le dispositif comprend en outre des moyens générateurs de fumées par mise à feu d'un échantillon de matière dont la corrosivité des fumées est à mesurer. Plus précisément, il est prévu une capsule circulaire 50 en silice, matériau choisi pour son excellente résistance aux chocs thermiques, au fond de laquelle est enroulée en spirale une résistance 52 constituée par un fil d'alliage nickel-chrome gainé d'un matériau connu sous la dénomination "Inconel" (Marque déposée), choisi pour sa bonne résistance à la corrosion. La capsule 50 est montée sur la face intérieure de la porte 20a, dans le bas de celle-ci, par l'intermédiaire d'une tige de support 54, par exemple en acier inoxydable. Les deux extrémités froides de la résistance 52 sont reliées à un connecteur 56 traversant la porte et permettant de raccorder ladite résistance à un générateur de courant approprié (non représenté).

L'échantillon de la matière plastique soumise au test se présentera avantageusement sous forme de granulés, dont une quantité déterminée avec précision sera placée dans la capsule 50. L'alimentation électrique de la résistance 52 sera par ailleurs conçue pour atteindre dans la capsule une température suffisante pour provoquer la pyrolyse de la matière.

On pourra prévoir, dans la région de l'enceinte où s'effectue la mise à feu, un revêtement intérieur en "Téflon" (Marque déposée) indiqué en 58, destiné à protéger les parois de l'enceinte pendant la combustion.

On trouve en outre un dispositif de condensation des fumées et des produits de pyrolyse engendrés par la mise à feu précitée, qui est monté dans la région inférieure de la porte opposée 20b. Ce dispositif comprend un support 60 en polyméthacrylate de méthyle présentant la forme d'un parallélépipède creux dans lequel est encastré un radiateur formé d'une plaque de cuivre (non visible), en laissant cependant entre le fond du support et le radiateur une cavité. De l'eau de refroidissement est amenée à circuler dans cette cavité, par des conduits d'arrivée et de départ, respectivement 64 et 66, traversant la porte 20b.

Une éprouvette de mesure, schématiquement représentée en 70, est placée dans le support 60 de manière à être en contact thermique avec le radiateur mentionné ci-dessus. On utilisera par exemple à cet effet de la graisse silicone.

L'éprouvette présentera avantageusement la forme d'un circuit électrique résistif porté par un support et obtenu de préférence par la technique de gravure bien connue dans le domaine des circuits imprimés. Elle comporte une bande de cuivre mince conformée en serpentin sur le support et se terminant par deux surfaces conductrices plus larges qui permettront de relier l'éprouvette, par deux conducteurs 72, 74 traversant la porte 20b, à un appareil de mesure de la résistance électrique (non représenté).

Enfin sont prévus des moyens pour engendrer à l'intérieur de l'enceinte de l'air ayant une humidité bien déterminée. Ces moyens comprennent un conduit d'entrée d'air sec 80 et un conduit de reprise d'air 82 traversant respectivement les portes 20b et 20a. Ces conduits seront de préférence équipés de robinets d'arrêt permettant d'interrompre la circulation d'air à un instant prédéterminé. Ces moyens comprennent en outre un troisième conduit 84, traversant la porte 20b à proximité du conduit 80, ce troisième conduit étant normalement obturé par une membrane (non représentée).

L'obtention du degré d'humidité souhaité est réalisée en faisant circuler tout d'abord dans l'enceinte de l'air sec, afin de déterminer un point bas de l'humidité relative à l'intérieur de celle-ci, par exemple inférieur à 5%. Une quantité d'eau prédéterminée est alors introduite dans l'enceinte à travers la membrane, par exemple à l'aide d'une seringue, pour obtenir le degré d'humidité relative souhaité avant la mise à feu de l'échantillon.

Le dispositif ci-dessus fonctionne de la manière suivante : on place tout d'abord dans la capsule de silice 50, en contact avec la résistance 52, une quantité prédéterminée de l'échantillon dont les fumées sont à analyser, et l'on place en même temps dans le support 60 une éprouvette neuve. Les portes 20a et 20b sont alors refermées et les moyens de chauffage et les moyens générateurs d'air humide sont mis en oeuvre pour obtenir à l'intérieur de l'enceinte une atmosphère de température et d'humidité données. L'échantillon est alors mis à feu en alimentant la résistance 52, et les fumées et produits de pyrolyse formés vont se condenser par convection naturelle sur la surface froide de l'éprouvette, cette condensation étant rendue possible par l'établissement d'une hygrométrie relativement élevée. On peut noter à cet égard que la condensation est effectuée avec une très bonne sélectivité du fait que la plus grande partie des parois de l'enceinte est maintenue par les moyens de chauffage à une température déterminée, de l'ordre de 50°, évitant la condensation sur ces parois. L'on mesure et l'on enregistre alors périodiquement la valeur de la résistance de l'éprouvette 70, et l'on en déduit l'importance de l'effet corrosif des fumées et des produits de pyrolyse sur le cuivre.

En pratique, ce dispositif facilitera le choix des matières plastiques les plus appropriées, notamment dans les centraux téléphoniques, pour minimiser les dégradations des circuits conducteurs lors d'un incendie.

Le dispositif décrit ci-dessus, et tout particulièrement la structure de l'enceinte et de ses moyens de chauffage asservis intégrés, est avantageux en ce qu'il permet de réaliser de façon répétable et reproductible la condensation de fumées et de produits de pyrolyse obtenus par combustion de matières plastiques. Plus particulièrement, l'invention permet une bonne maîtrise du cycle thermique appliqué au dispositif, ainsi qu'une bonne sélectivité de la condensation, notamment grâce à la grande homogénéité de la température des diverses parois de l'enceinte, en ne créant aucune condensation indésirable sur des parties froides autres que l'éprouvette.

Par ailleurs, la structure de l'invention, tout en évitant les aléas qui étaient dûs dans la technique antérieure à l'utilisation d'une enceinte climatique, permet l'observation des phénomènes de combustion de condensation et de corrosion, qui sont, à côté de la mesure proprement-dite, des éléments déterminants pour le choix des matières plastiques.

Bien entendu, la présente invention n'est pas limitée à la forme de réalisation décrite ci-dessus et représentée sur les dessins, mais l'homme de l'art pourra y apporter toute variante ou modification sans sortir de son cadre.

**Revendications**

**1.** Dispositif de mesure de la corrosivité de fumées, comprenant une enceinte (10), des moyens pour créer dans l'enceinte (10) une atmosphère d'air d'humidité déterminée (80, 82, 84), des moyens de chauffage (40) pour amener ladite atmosphère et les parois de l'enceinte (10) à une température déterminée, des moyens (50, 52, 56) pour provoquer la combustion d'un échantillon de matière dans l'enceinte (10), des moyens de refroidissement à circulation d'eau (60, 64, 66) pour condenser les fumées et produits de pyrolyse engendrés par ladite combustion sur un élément métallique résistif (70) exposé à l'intérieur de l'enceinte (10), la mesure de la corrosivité des fumées étant effectuée en mesurant la variation de résistance électrique dudit élément (10), caractérisé en ce que l'enceinte (10) comprend : un cylindre en polyméthacrylate de méthyle (12) ouvert à ses deux extrémités ; deux portes d'extrémité (20a, 20b) thermiquement isolantes, constituées d'un ensemble de panneaux (201, 202, 203) en polyméthacrylate de méthyle séparés par de l'air intersticiel, et des moyens d'isolation thermique et d'étanchéité aux gaz (22, 24) entre les portes (20a, 20b) et le cylindre (12) ; et en ce que les moyens de chauffage comprennent un fil métallique résistif (40) enroulé en hélice sur la périphérie extérieure du cylindre (12).

2. Dispositif selon la revendication 1, caractérisé en ce que les moyens de chauffage (40) sont asservis et comprennent un élément capteur de température sous la forme d'un second fil métallique résistif (44) enroulé en hélice sur la périphérie extérieure du cylindre (12) parallèlement au premier.

3. Dispositif selon l'une quelconque des revendications 1 et 2, caractérisé en ce que les moyens pour créer dans l'enceinte une atmosphère d'air d'humidité déterminée (80, 82, 84), les moyens (50, 52, 56) pour provoquer la combustion d'un échantillon de matière dans l'enceinte (10), les moyens de refroidissement à circulation d'eau (60, 64, 66) pour condenser les fumées et produits de pyrolyse engendrés par ladite combustion sur un élément métallique résistif (70), et ledit élément métallique résistif (70) sont montés sur les portes (20a, 20b) de l'enceinte (10).

## Claims

1. A device for measurement of corrosiveness of smoke, comprising a chamber (10), means for creating inside the chamber (10) an atmosphere of air of predetermined humidity (80,82,84), heating means (40) for bringing said atmosphere and the walls of said chamber (10) to a predetermined temperature, means (50,52,56) for causing combustion of a sample of material in the chamber (10), water circulation cooling means (60,64,66) for condensing smoke and products of pyrolysis generated by said combustion onto a resistive metallic element (70) exposed inside said chamber (10), measurement of corrosiveness of said smoke being carried out by measuring variation in electrical resistance of said element (70), characterized in that the chamber (10) comprises : a methyl polymethacrylate cylinder (12) open at its two ends ; two thermally insulating end doors (20a,20b), constituted by an assembly of methyl polymethacrylate panels (201,202,203) separated by interstitial air, and thermally-insulating and gas-tight means (22,24) between the doors (20a,20b) and the cylinder (12) ; and in that said heating means comprise a resistive metallic wire (40) helically wound on the external periphery of said cylinder (12).

2. A device according to claim 1, characterized in that the heating means (40) are servo-controlled and comprise a temperature transducer element in the form of a second resistive metallic wire (44) helically wound on said external periphery of the cylinder (12) parallel to the first wire.

3. A device according to claim 1, wherein the means (80,82,84) for creating in said chamber an atmosphere of air of predetermined humidity, the means (50,52,56) for causing the combustion of a sample of material in the chamber (10), the water circulation cooling means (60,64,66) for condensing the smoke and products of pyrolysis generated by said combustion on a resistive metallic element (70), and said resistive metallic element (70) are mounted on the doors (20a,20b) of the chamber (10).

## Patentansprüche

1. Vorrichtung zum Messen der Korrosivität von Dämpfen, die eine Kammer (10), eine Vorrichtung (80, 82, 84) zum Erzeugen einer Atmosphäre mit einer bestimmten Luftfeuchtigkeit in der Kammer (10), eine Heizung (40), um diese Atmosphäre und die Wände der Kammer (10) auf eine bestimmte Temperatur zu bringen, eine Vorrichtung (50, 52, 56), um die Verbrennung einer Werkstoffprobe in der Kammer (10) einzuleiten, und eine Kühlvorrichtung mit Wasserzirkulation (60, 64, 66) aufweist, um die Dämpfe und die durch die Verbrennung erzeugten Pyrolyseprodukte auf einem metallischen Widerstandselement (70) zu kondensieren, das dem Inneren der Kammer (10) ausgesetzt ist, wobei die Korrosivität der Dämpfe durch Messen der elektrischen Widerstandsänderung dieses Elements (70) erfaßt wird, **dadurch gekennzeichnet**, daß die Kammer (10) aufweist: einen an seinen beiden Enden offenen Zylinder (12) aus Polymethylmethacrylat, zwei thermisch isolierende Abschlußdeckel (20a, 20b), die aus einer Anordnung von durch Luftzwischenräume getrennten Polymethylmethacrylat-Platten (201, 202, 203) bestehen, und eine Vorrichtung (22, 24) zur thermischen Isolation und Gasabdichtung zwischen den Deckeln (20a, 20b) und dem Zylinder (12), und dadurch, daß die Heizung einen schraubenförmig um die äußere Oberfläche des Zylinders (12) gewickelten metallischen Widerstandsdraht (40) aufweist.

2. Vorrichtung nach Anspruch 1, **dadurch gekennzeichnet**, daß die Heizung (40) gesteuert ist und einen Temperaturgeber in Form eines zweiten metallischen Widerstandsdrahtes (44) aufweist, der parallel zum ersten Draht schraubenförmig um die äußere Oberfläche des Zylinders (12) gewickelt ist.

3. Vorrichtung nach Anspruch 1 oder 2, **dadurch gekennzeichnet**, daß die Vorrichtung (80, 82, 84) zum Erzeugen der Atmosphäre mit einer bestimmten Luftfeuchtigkeit in der Kammer, die Vorrichtung (50, 52, 56) zum Einleiten der Verbrennung einer Werkstoffprobe in der Kammer (10), die Kühlvorrichtung (60, 64, 66) mit Wasserzirkulation zum Kondensieren der durch die Verbrennung erzeugten Dämpfe und der Pyrolyseprodukte auf dem metallischen Widerstandselement (70) und das metallische Widerstandselement (70) an den Deckeln (20a, 20b) der Kammer (10) befestigt sind.

FIG.1

EP 0 254 637 B1

FIG.2